# FASCICULE DE BREVET EUROPEEN

(11) **EP 2 867 122 B1**
(45) Date de publication et mention de la délivrance du brevet: **15.04.2020**
(21) Numéro de dépôt: 13733395.1
(22) Date de dépôt: 12.06.2013
(51) Int. Cl.: B64D 41/00, B64C 27/04

(54) **PROCÉDÉ ET CONFIGURATION D'APPORT D'ÉNERGIE PROPULSIVE ET/OU NON PROPULSIVE DANS UNE ARCHITECTURE D'HÉLICOPTÈRE PAR UN MOTEUR AUXILIAIRE DE PUISSANCE**
VERFAHREN UND VORRICHTUNG ZUR VERSORGUNG EINES HUBSCHRAUBERS MIT ELEKTRISCHER UND/ODER ANTRIEBSENERGIE UNTER VERWENDUNG EINER APU
METHOD AND DEVICE FOR PROVIDING BY MEANS OF AN APU PROPULSIVE AND/OR NON-PROPULSIVE ENERGY TO A HELICOPTER

(30) Priorité: 29.06.2012 FR 1256246
(43) Date de publication de la demande: 06.05.2015
(73) Titulaire: Safran Helicopter Engines, 64510 Bordes (FR); Safran Power Units, 31200 Toulouse (FR); Safran Electrical & Power, 31702 Blagnac Cedex (FR)
(72) Inventeur: BEDRINE, Olivier, 64290 Bosdarros (FR); SARRAT, Christian, 65130 Mauvezin (FR); SILET, Fabien, 31140 Pechbonnieu (FR); VIEILLARD, Sébastien, 77720 La Chapelle Gauthier (FR)
(74) Mandataire: Gevers & Orès
(86) Numéro de dépôt international: PCT/FR2013/051379
(87) Numéro de publication internationale: WO 2014/001683

(56) Documents cités:
- EP-A1- 0 091 744
- EP-A2- 1 069 044
- EP-A2- 2 404 775
- WO-A2-2004/037641

## Description

### DOMAINE TECHNIQUE

L'invention concerne un procédé et une configuration d'architecture d'apport d'énergie propulsive et/ou non propulsive dans une architecture d'hélicoptère par un moteur auxiliaire de puissance, par exemple un groupe auxiliaire de puissance connu sous l'appellation abrégée APU (initiales de « Auxiliary Power Unit » en terminologie anglaise), ainsi qu'une architecture de mise en œuvre de ce procédé. L'apport d'énergie est dit direct dans la mesure où il ne passe pas par les moteurs principaux de l'hélicoptère. Par moteur auxiliaire, on entend tout système thermique qui permet d'apporter de la puissance, comme un groupe APU, mais également de manière générale une turbine à gaz à turbine libre ou liée, de type « moteur principal », ou encore un moteur thermique, par exemple un moteur diesel, ou encore une pile à combustible.

Les hélicoptères actuels sont systématiquement équipés de moteurs principaux servant à la propulsion, et parfois d'un groupe APU dont la fonction est de fournir de l'énergie non propulsive au sol (allumage des moteurs, transitoire électrique et pneumatique) ou en vol, lorsque les moteurs principaux ne sont pas en mesure de le faire (par exemple dans le cas d'une panne ou d'une défaillance d'un moteur).

Comme par exemple divulgué dans le document EP 2 404 775 A2, les hélicoptères sont classiquement équipés de moteurs principaux qui servent à la propulsion et parfois d'un moteur auxiliaire. Actuellement, les moteurs auxiliaires sont des groupes APU : ce sont des petites turbines à gaz capables de fournir de la puissance non propulsive - électrique, mécanique, hydraulique et/ou pneumatique - au sol ou dans les différentes phases de vol où les moteurs principaux ne sont pas en mesure de le faire: phase de transition (décollage, atterrissage) ou de recherche, panne d'un moteur, défaillance d'une machine électrique, etc.. Par exemple, en régime de panne d'un moteur (en abrégé régime OEI, initiales de « One Engine Inoperative » en terminologie anglaise), le groupe APU est allumé pour qu'il fournisse de l'énergie non propulsive afin d'alléger ou de supprimer la contribution électrique du moteur restant.

Lorsque les moteurs principaux sont opérationnels, les groupes APU restent donc éteints en vol, ce qui représente une charge inutile. L'invention se rapporte à l'optimisation de l'utilisation des groupes APU afin de rentabiliser leur présence.

### ÉTAT DE LA TECHNIQUE

Une turbine à gaz comporte classiquement, de base, un générateur de gaz formé d'un ensemble compresseur - chambre de combustion - turbine, disposé entre une entrée d'air et une tuyère d'échappement. En fonctionnement, le carburant est injecté dans la chambre et la combustion du mélange carburant/air fournit des gaz énergétiques. Ces gaz chauds sont détendus dans la turbine qui entraîne mécaniquement le compresseur via un arbre haute pression (HP en abrégé). Ce type d'architecture et de fonctionnement vaut aussi bien pour les moteurs principaux d'hélicoptères que pour les groupes APU.

Pour les moteurs principaux, l'arbre d'entraînement transmet également la puissance disponible pour fournir de l'énergie propulsive aux rotors de l'hélicoptère - rotor principal et rotor anti-couple - ainsi que de l'énergie non propulsive (électrique, pneumatique, hydraulique). La puissance est transmise via une boîte de transmission principale dite BTP. Dans les moteurs modernes, les gaz de combustion subissent une seconde détente dans une turbine libre avant d'entraîner la BTP. La BTP transmet de la puissance aux rotors, au système électrique qui alimente le réseau électrique de bord de l'hélicoptère, ainsi qu'aux autres équipements consommateurs d'énergie (pompe, compresseur de charge, etc.), en particulier du système de conditionnement d'air ECS (initiales de « Environmental Conditioning System » en terminologie anglaise).

Pour les groupes APU, leur turbine n'entraîne que les accessoires consommateurs d'énergie non propulsive via une boîte de transmission montée sur leur arbre. Les architectures d'hélicoptère actuelles comprenant un groupe APU n'utilisent donc pas toute la capacité de puissance disponible pour fournir en vol de l'énergie non propulsive et propulsive. En particulier, lorsque les moteurs principaux sont opérationnels, le groupe APU est éteint et représente alors une charge inutile.

### EXPOSÉ DE L'INVENTION

L'invention vise à optimiser l'ensemble de la motorisation disponible sur un hélicoptère muni d'un moteur auxiliaire en permettant à ce dernier de fournir de l'énergie non propulsive et/ou propulsive en vol. Pour ce faire, ce moteur auxiliaire est couplé de sorte à pouvoir participer à la fourniture d'énergie propulsive, c'est-à-dire mécanique ou électrique, et électrique non propulsive de l'aéronef, dans les phases de vol où un apport supplémentaire d'énergie permet d'améliorer les performances de l'hélicoptère et/ou de satisfaire une répartition optimisée des sources d'énergie.

Plus précisément, la présente invention a pour objet un procédé d'apport d'énergie propulsive et/ou non propulsive dans une architecture d'hélicoptère comportant un réseau électrique de bord, une motorisation principale couplée à un système de transmission mécanique qui entraîne en vol des organes de propulsion. Un système de conversion d'énergie mécanique / électrique couplée au système de transmission mécanique et/ou à la motorisation principale fournit de l'énergie non propulsive au réseau électrique de bord. Le procédé consiste à coupler par conversion d'énergie un moteur auxiliaire supplémentaire au réseau de bord, pour pouvoir lui fournir, au sol, de l'énergie non propulsive ainsi qu'à la motorisation principale pour son démarrage, et pouvoir fournir, en vol, de l'énergie non propulsive au réseau de bord, en complément et jusqu'au remplacement du prélèvement effectué sur le système de transmission mécanique et/ou la motorisation principale.

Le moteur auxiliaire fournit également de l'énergie **électrique** à une motorisation dédiée sur le système de transmission mécanique pour augmenter ou fournir partiellement la puissance propulsive.

De préférence, le système de transmission mécanique comportant un système de réduction de vitesse, le moteur auxiliaire peut également ou alternativement être couplé directement à ce système de réduction de vitesse pour fournir de l'énergie propulsive à au moins un organe de propulsion de l'hélicoptère, puis couplé via une conversion d'énergie réversible au réseau de bord pour fournir de l'énergie non propulsive ainsi qu'à la motorisation principale pour son démarrage. Le moteur auxiliaire peut alors fournir de l'énergie propulsive au rotor anti-couple dit RAC et/ou au rotor principal.

Dans ces conditions, le moteur auxiliaire est opérationnel pour fournir de l'énergie propulsive et/ou non propulsive en fonction des besoins dans les différentes phases de vol, en fonctionnement normal ou asymétrique des moteurs principaux. Le fonctionnement asymétrique peut être involontaire (cas de défaillance ou de panne) ou volontaire (phases transitoires, accélérations, etc.).

Selon des modes de mise en œuvre préférés :
- l'énergie électrique du réseau de bord provient d'une modulation entre l'énergie prélevée sur le système de transmission mécanique et la motorisation principale via la conversion d'énergie;
- la conversion d'énergie n'est connectée qu'au système de réduction de sorte que l'énergie électrique du réseau de bord ne provient que du moteur auxiliaire via le système de réduction lorsque la motorisation principale est éteinte;
- le moteur auxiliaire est intégré à la BTP du système de transmission mécanique de sorte qu'il fournisse de l'énergie électrique au réseau de bord par conversion d'énergie avec des générateurs sur la BTP et de l'énergie propulsive à au moins un organe de propulsion via la BTP.

L'invention se rapporte également à une configuration d'apport d'énergie propulsive et/ou non propulsive dans un hélicoptère. Cette configuration comporte deux moteurs principaux comportant des démarreurs, des moyens de réception d'énergie électrique comportant un réseau électrique de bord et une électronique de puissance en liaison avec les démarreurs et un système de conversion d'énergie mécanique / électrique situé entre une boite de transmission principale BTP d'un système de transmission mécanique aux organes de propulsion et les moyens de réception d'énergie électrique. La configuration comporte également un moteur auxiliaire de puissance de fourniture d'énergie électrique aux moyens de réception d'énergie électrique via le système de conversion d'énergie et des moyens de couplage mécanique entre le moteur auxiliaire et au moins un organe de propulsion.

Le système de conversion d'énergie peut comporter des générateurs ou des groupes moto-générateurs réversibles en connexion avec la BTP et/ou les moteurs principaux et/ou le moteur auxiliaire pour fournir de l'énergie électrique au réseau de bord et à l'électronique de puissance.

Selon de modes de réalisation particuliers :
- la connexion entre le moteur auxiliaire et au moins l'un des organes de propulsion est réalisée par un moteur dédié sur cet organe et/ou des moto-générateurs sur la BTP via l'électronique de puissance activée par le système de conversion d'énergie lié au moteur auxiliaire ;
- le moteur auxiliaire est intégré sur la BTP en liaison avec des générateurs pour fournir de l'énergie non propulsive, le moteur auxiliaire étant apte à fournir de l'énergie non propulsive au réseau de bord et à l'électronique de puissance via les générateurs sur la BTP et de l'énergie propulsive via la BTP à au moins un organe de propulsion, à savoir au rotor principal et/ou au RAC;
- la connexion entre le moteur auxiliaire et le système de conversion d'énergie est réalisée via un ensemble réducteur appartenant au système de transmission mécanique;
- le système de transmission mécanique comportant un ensemble réducteur, cet ensemble réducteur connecte directement le moteur auxiliaire à la BTP et/ou à l'arbre d'entraînement du RAC, et le moteur auxiliaire à un moto-générateur et/ou à au moins un générateur formant partiellement ou en totalité le système de conversion d'énergie pour fournir de l'énergie électrique au réseau de bord et à l'électronique de puissance;
- l'ensemble réducteur comporte au moins deux lignes d'engrenages de réduction de vitesse couplées par au moins un arbre de liaison entre le moteur auxiliaire monté sur la première ligne et une prise de mouvement sur la BTP ou le RAC montés sur la deuxième ligne, et dans lequel au moins un arbre de liaison est équipé d'un moyen de découplage réversible et d'une roue libre pour que, respectivement, le moteur auxiliaire n'entraîne pas le rotor principal au sol et que le rotor principal n'entraîne pas le moteur auxiliaire au sol ou en vol;
- dans le cas où le(s) générateur(s) du système de conversion d'énergie est (sont) connecté(s) directement à l'ensemble réducteur, l'arbre de liaison équipé du moyen de découplage réversible et de la roue libre entraîne la prise de mouvement et le(s) générateur(s) montés via une autre roue libre sur la deuxième ligne d'engrenages et/ou sur au moins un deuxième arbre de liaison équipé d'une roue libre entre un générateur et le moteur auxiliaire ;
- dans le cas où le moteur auxiliaire possède une turbine libre, la turbine libre entraîne le(s) générateur(s) sur la deuxième ligne d'engrenages du réducteur par un arbre de liaison équipé d'une roue libre et d'un frein ou sur une troisième ligne d'engrenages montée avec une roue libre sur un arbre de liaison équipé d'un moyen de découplage réversible et d'une roue libre, ainsi que sur au moins un deuxième arbre de liaison monté avec une roue libre entre la turbine libre et un générateur ;
- le moyen de découplage réversible est choisi parmi un coupleur hydraulique, un crabot et un embrayage.

### BRÈVE DESCRIPTION DES FIGURES

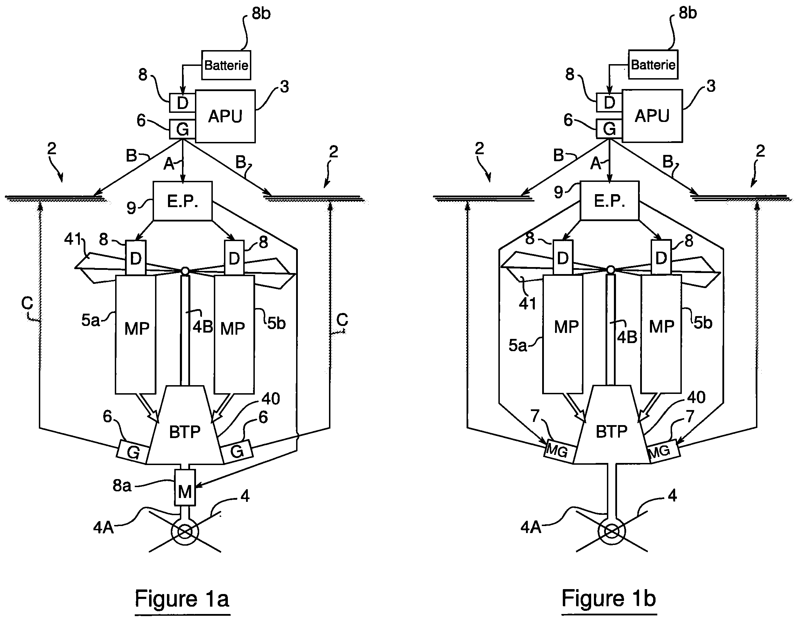

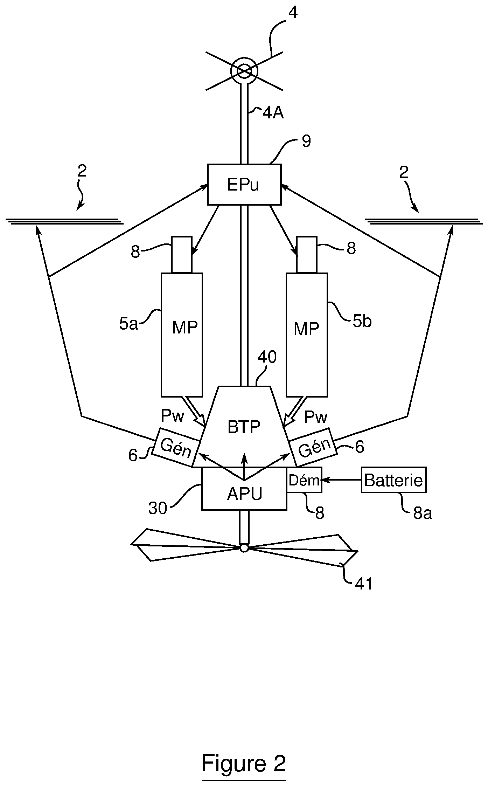

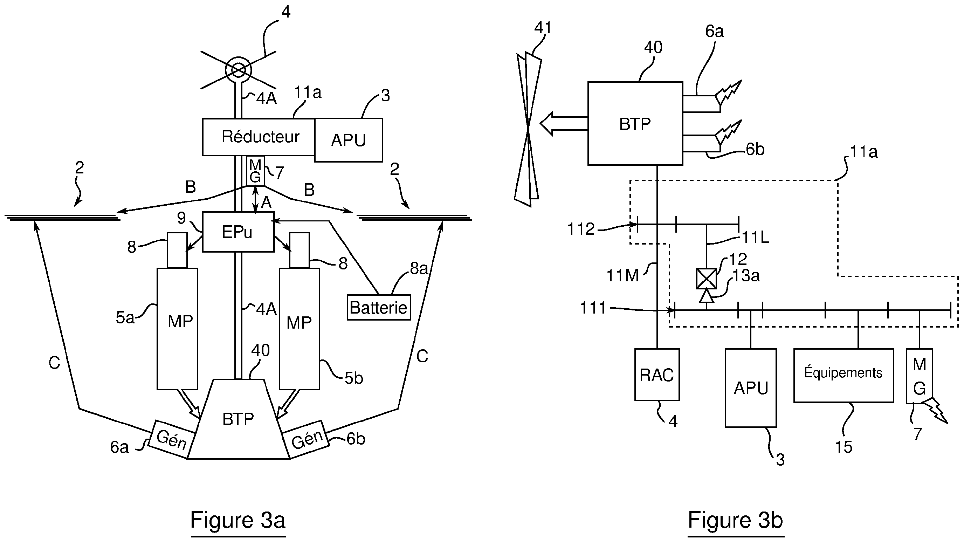

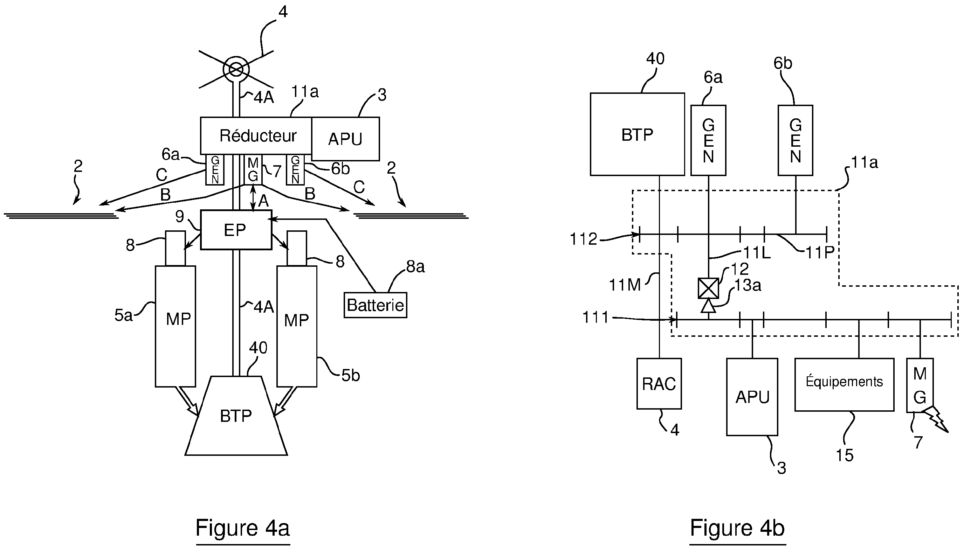

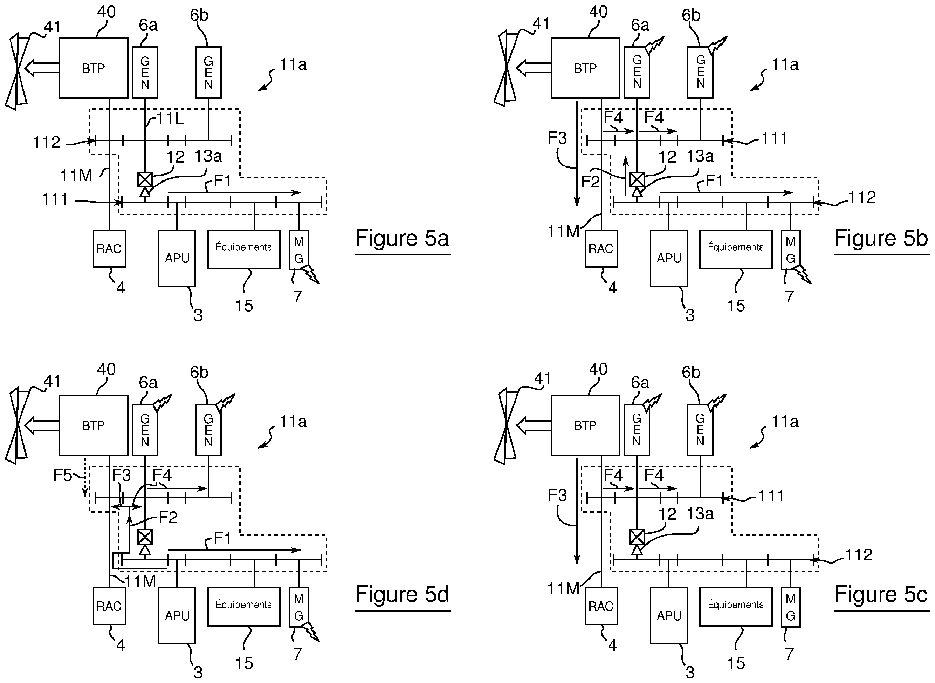

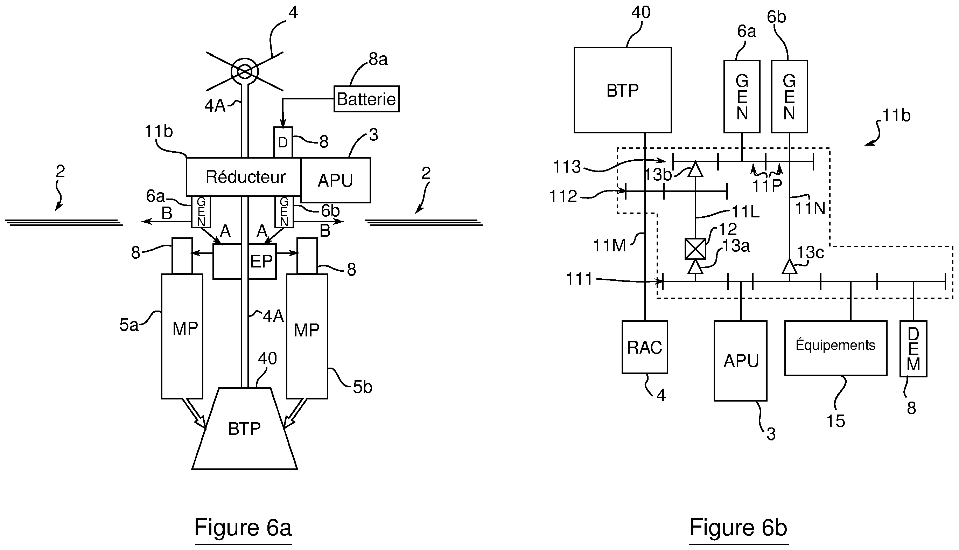

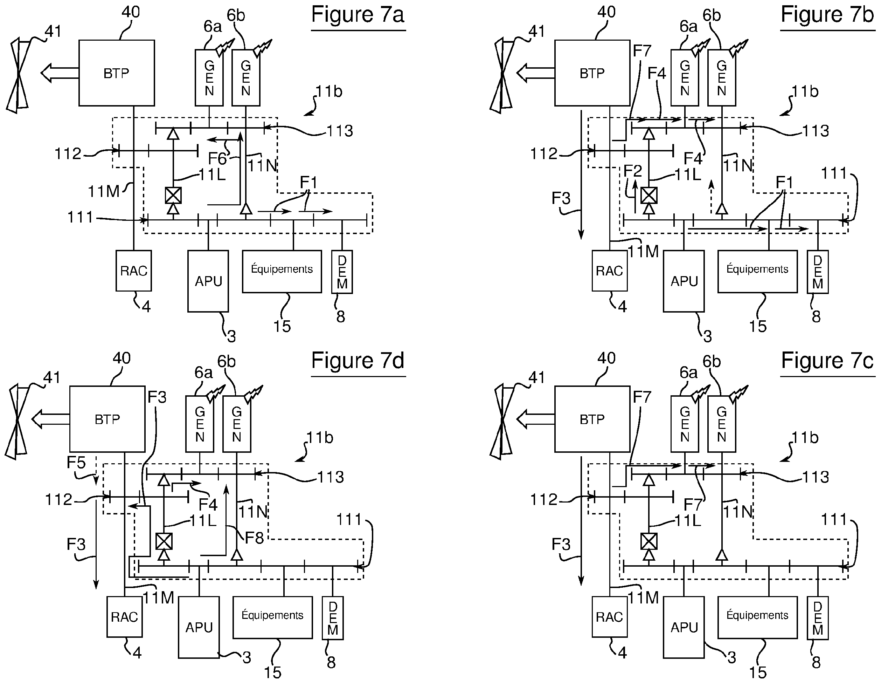

D'autres aspects, caractéristiques et avantages de l'invention apparaîtront dans la description non limitative qui suit, relative à des modes de réalisation particuliers, en référence aux dessins annexés qui représentent, respectivement :
- en figures 1a et 1b, un exemple de configuration schématisée d'apport d'énergie fournie par un moteur auxiliaire du type groupe APU au réseau de bord et à un moteur électrique monté sur l'arbre du RAC dans le cas où les générateurs du système de conversion d'énergie sont montés directement sur la BTP (figure 1a) ou dans des groupes réversibles moto-générateurs (figure 1b) montés sur la boîte BTP;
- en figure 2, un exemple de configuration schématisée d'apport d'énergie par un groupe APU dans lequel le groupe APU est intégrée à la BTP et couplée aux générateurs électriques du système de conversion d'énergie ou à la BTP ;
- en figures 3a et 3b, des exemples schématisés de configuration et de réducteur de cette configuration, dans le cas où le groupe APU est couplé à la boîte BTP / RAC via un ensemble réducteur de vitesse sur lequel est couplé un moto-générateur réversible du système de conversion d'énergie et où les générateurs de ce système de conversion sont montés sur la BTP ;
- en figures 4a et 4b, des exemples schématisés de configuration et de réducteur de cette configuration, dans le cas où le groupe APU est couplé à la boîte BTP / RAC via un ensemble réducteur de vitesse selon les figures 3a et 3b, et où les générateurs du système de conversion d'énergie sont montés sur l'ensemble réducteur ;
- en figures 5a à 5d, des schémas du réducteur selon les figures 4a et 4b dans quatre phases de fonctionnement, respectivement : démarrage des moteurs principaux par le groupe APU au sol avec arbre de liaison du réducteur découplé, groupe APU et moteurs principaux allumés en vol, groupe APU éteint et moteurs principaux allumés en vol, et groupe APU allumé et un moteur principal en panne ou défaillant partiellement ;
- en figures 6a et 6b, des exemples schématisés de configuration et de réducteur selon les figures 4a et 4b dans le cas où la conversion d'énergie ne comporte que des générateurs couplés à l'ensemble réducteur ;
- en figures 7a à 7d, des schémas du réducteur selon les figures 6a et 6b dans les quatre phases de fonctionnement correspondant aux figures 5a à 5d ; et

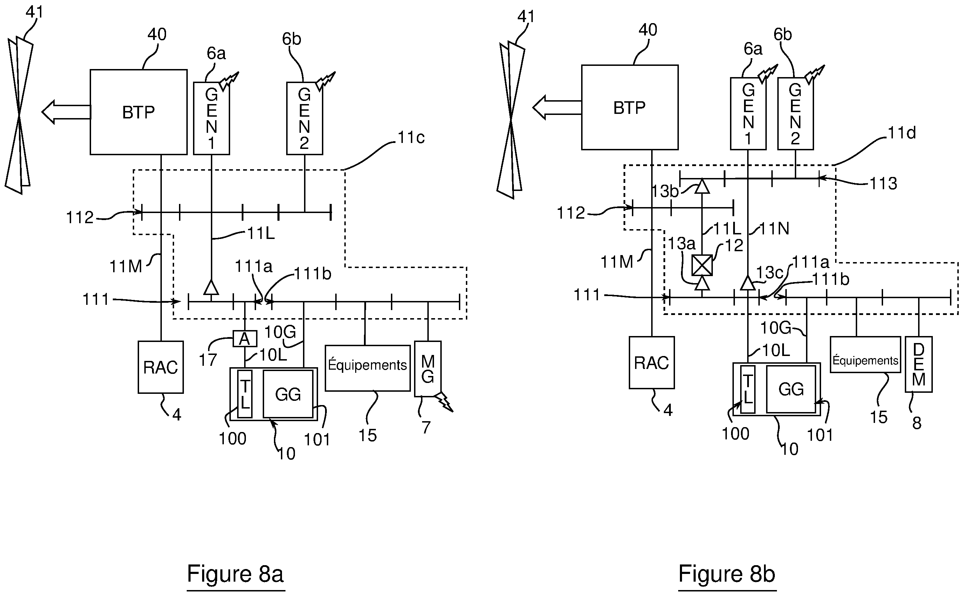

- les figures 8a et 8b, deux schémas d'ensembles réducteurs dans le cas où le moteur auxiliaire est une turbine à gaz à turbine libre, respectivement sans et avec un moyen de couplage réversible de la turbine libre.

### DESCRIPTION DETAILLEE DE MODES DE REALISATION

Dans toutes les figures, les éléments identiques ou équivalents, exerçant une même fonction, sont identifiés avec des signes de référence identiques ou dérivés. Dans le cas où plusieurs figures représentent un élément référencé par un même signe, cette référence renvoie au passage dans lequel l'élément correspondant à ce signe est décrit.

En référence aux figures 1a et 1b, la configuration d'architecture schématisée illustre l'apport d'énergie ou de puissance (dans l'instant) fournie par un moteur auxiliaire 3 du type groupe APU au réseau de bord 2 ainsi qu'au rotor anti-couple (dit RAC) 4 ou à la boîte de transmission principale (dite BTP) 40 d'un hélicoptère. Une architecture de base 1 comporte deux moteurs principaux 5a et 5b qui entraînent, via la BTP 40, l'arbre 4B du rotor principal 41 de voilure de l'hélicoptère et l'arbre 4A du RAC 4. Les moteurs principaux 5a et 5b fournissent également en vol de l'énergie électrique au réseau de bord 2 via la boîte BTP 40.

Cette architecture de base 1 est complétée par le moteur auxiliaire, le groupe APU 3 dans l'exemple illustré. Un système de conversion d'énergie mécanique / électrique permet de fournir de l'énergie électrique au réseau de bord 2 à partir des organes mécaniques, à savoir : le groupe APU 3, la boîte BTP 40 et/ou les moteurs principaux 5a et 5b. Ce système de conversion comporte, couplé à chaque organe, et suivant les configurations : au moins un générateur électrique dédié 6, par exemple un alternateur, au moins une machine électrique réversible 7 - un moteur-générateur ou moto-générateur ou démarreur/générateur -, et/ou un moteur électrique d'entraînement 8 ou 8a, par exemple un démarreur ou un moteur électrique dédié.

Plus précisément, le groupe APU 3 est couplé à un démarreur 8, actionné par une batterie 8b, et à un générateur électrique 6. Une fois le groupe APU démarré, le générateur 6 fournit de l'énergie électrique au réseau électrique de bord 2 de l'hélicoptère sur la ligne électrique « B », ainsi qu'aux démarreurs 8 des moteurs principaux 5a et 5b ligne électrique « A » via une électronique de puissance 9.

La BTP 40 fournit également de l'énergie électrique au réseau de bord 2 via des générateurs 6 (figure 1a) ou des moto-générateurs 7 (figure 1b) sur les lignes «C». L'utilisation en vol de la puissance délivrée par le générateur 6 du groupe APU 3 pour alimenter le réseau électrique 2 de l'hélicoptère permet alors de moduler jusqu'à supprimer le prélèvement électrique effectués sur les générateurs 6 ou les moto-générateurs 7 connectés à la BTP 40.

De plus, le générateur 6 en liaison avec le groupe APU 3 alimente -via l'électronique de puissance 9- soit le moteur électrique 8a, dédié à l'entraînement de l'arbre 4A du RAC 4 ou du rotor principal 41 via la BTP 40 (figure 1a), soit au moins l'un des moteurs des moto-générateurs 7 substitués aux générateurs 6 (figure 1b). Le moteur électrique dédié 8a est, dans l'exemple, monté sur l'arbre 4A du RAC 4, mais il peut être monté sur la BTP ou sur l'arbre 4B du rotor principal 41 dans d'autres exemples de montage.

Alternativement, les moteurs principaux 5a et 5b peuvent être couplés à une machine électrique réversible ou à un générateur électrique -avec un démarreur séparé- pour réaliser la génération électrique. La modulation de l'alimentation électrique opérée par la fourniture de puissance provenant du moteur auxiliaire permet là encore de réduire jusqu'à supprimer le prélèvement électrique opéré sur les moteurs principaux.

Dans un exemple de fonctionnement du groupe APU 3 au cours d'une mission, d'abord au sol puis en vol, les différentes phases du système de conversion d'énergie peuvent se succéder dans le temps de la façon suivante :
- au sol :
   - démarrage (batterie 8b, démarreur 8) du groupe APU 3,
   - alimentation du réseau de bord 2 et démarrage des moteurs principaux 5a et 5b par le groupe APU 3,
   - alimentation du réseau de bord 2 par les moteurs principaux 5a et 5b via les générateurs 6 (figure 1a) ou les machines électriques réversibles 7 (figure 1b) montées sur la BTP 40,
   - extinction du groupe APU 3 ;
- en vol :
   - redémarrage du groupe APU 3 et alimentation du réseau de bord 2 pour soulager le prélèvement sur la BTP 40 (figure 1b), ce qui génére une puissance supplémentaire sur le rotor principal,
   - alimentation du moteur électrique 8 sur la BTP 40 et/ou sur le RAC 4 par le groupe APU 3, permettant d'augmenter la puissance sur le rotor principal 41.

Un schéma de configuration d'architecture du type illustré par la figure 2 permet d'optimiser l'intégration du moteur auxiliaire, ici un groupe APU 30. Un ensemble de réduction de vitesse, du type décrit ci-dessous à roue(s) libre(s) et crabot ou équivalent (voir par exemple la description en référence à la figure 6b), est avantageusement intégré pour réaliser une telle optimisation en permettant de fournir de l'énergie propulsive et non propulsive. Dans cet exemple, le groupe APU 30 est équipé de moyens de connexion connus pour permettre son intégration directe sur la BTP 40, laquelle est couplée aux générateurs électriques 6 du système de conversion d'énergie. Le groupe APU 30 est alors apte à fournir :
- de l'énergie électrique au réseau de bord 2 et à l'électronique de puissance 9 via les générateurs 6 sur la BTP 40, et
- de l'énergie mécanique de propulsion au rotor principal 41 via la BTP 40 et/ou directement à l'arbre d'entraînement 4A du RAC 4.

De plus, l'intégration du groupe APU 30, ou plus généralement de tout moteur auxiliaire, permet avantageusement de mutualiser certaines fonctions ou équipements (réduction de vitesse, circuit d'huile, etc.) et de limiter les interfaces.

Alternativement ou cumulativement aux solutions de transmission électrique de l'apport d'énergie du moteur auxiliaire, telles que celles décrites ci-dessus, des solutions de transmission mécanique entre le moteur auxiliaire et l'entraînement de l'ensemble BTP / RAC -via un ensemble réducteur de vitesse-sont maintenant décrites. Ces configurations d'architecture mécaniques permettent de répondre aux mêmes besoins.

En référence aux figures 3a et 3b, des exemples de schémas de configuration d'architecture et d'un réducteur de cette architecture sont illustrés. Dans cette configuration, le système de conversion d'énergie est formé par les générateurs 6a et 6b couplés à la BTP 40 et par un moto-générateur 7 couplé à un ensemble réducteur de vitesse 11a pour fournir de l'énergie électrique au réseau de bord 2 et à l'électronique de puissance 9. La batterie 8a est ici directement branchée sur l'électronique de puissance 9 pour uniquement alimenter et démarrer le moto-générateur 7 du groupe APU 3. Le groupe auxiliaire APU 3 est couplé à l'arbre 4A du RAC 4 via l'ensemble réducteur de vitesse 11a, sur lequel est couplé le moto-générateur 7 de conversion d'énergie. Alternativement, le groupe APU peut être couplé à la BTP et les générateurs 6a et 6b peuvent être remplacés par des machines réversibles ou dédiées intégrées sur les moteurs principaux (alternative non représentée).

L'ensemble réducteur 11a constitue avec la BTP 40 un système de transmission mécanique. Dans l'exemple non limitatif illustré, l'ensemble réducteur 11a connecte directement le groupe APU 3 à l'arbre 4A et au moto-générateur réversible 7.

Comme l'illustre la figure 3b, l'ensemble réducteur 11a comporte deux lignes parallèles d'engrenages de réduction de vitesse, 111 et 112, couplées par au moins un arbre de liaison 11L entre le groupe APU 3 et la prise de mouvement 11M sur la BTP 40 ou le RAC 4. La BTP 40 fournit de la puissance mécanique dans la durée au rotor principal 41.

Dans la ligne d'engrenages 111, le groupe APU 3 fournit de la puissance mécanique aux équipements 15 (pompe, compresseur de charge, etc.) et au moto-générateur 7. La prise de mouvement 11M sur l'ensemble BTP 40 / RAC 4 est engrenée sur la ligne 112.

L'arbre de liaison 11L est équipé d'un moyen de découplage réversible, ici un crabot 12, et d'une roue libre 13a. Le crabot 12 permet de déconnecter le groupe APU 3 pour que ce groupe 3 n'entraîne pas au sol (dans les phases de fonctionnement où le groupe APU 3 est utilisé classiquement), la BTP 40 et/ou le RAC 4 (ci-après « ensemble BTP / RAC »), et plus particulièrement le rotor principal 41. La roue libre 13a permet d'empêcher en vol, et de manière continue (c'est-à-dire sans risque de dysfonctionnement dans les conditions standards), que le rotor principal 41 - entrainés par les moteurs principaux n'entraîne à son tour le groupe APU 3. De plus, la roue libre 13a permet également au sol de pouvoir reconnecter le crabot 12 à couple nul.

Dans ces conditions, l'ensemble réducteur 11a permet avantageusement de réduire la vitesse entre le groupe APU 3 et la prise de mouvement 11M sur l'ensemble BTP 40 / RAC 4, afin de pouvoir injecter de la puissance mécanique. La puissance du groupe APU en vol sur l'ensemble BTP / RAC est alors fournie en fonction des besoins.

Une amélioration des performances de l'hélicoptère en vol est obtenue en particulier dans les cas suivants :
- par l'alimentation du réseau électrique de bord 2 par le moto-générateur 7 pour permettre de réduire voire supprimer le prélèvement électrique sur les générateurs 6a et 6b connectés à la BTP 40 ;
- par l'utilisation de la roue libre 13a pour n'entraîner que le générateur du moto-générateur 7 par le moteur auxiliaire (le groupe APU 3) lorsque le rotor principal 41 tourne (la vitesse du moteur auxiliaire restant toujours inférieure à celle du rotor principal) ;
- par la fourniture alternative ou cumulative de la puissance mécanique à l'ensemble BTP 40 / RAC 4 à partir du réducteur.

Selon une variante, les générateurs du système de conversion sont intégrés sur le réducteur et non sur la BTP. Cette variante est illustrée par les figures 4a et 4b, avec des exemples de schémas de configuration d'architecture et de réducteur où le groupe APU 3 est couplé à l'ensemble BTP 40 / RAC 4 via l'ensemble réducteur de vitesse 11a, et où les générateurs 6a et 6b du système de conversion d'énergie sont montés sur l'ensemble réducteur 11a.

L'ensemble réducteur 11a (figure 4b) reprend les éléments de la figure 3b, avec les lignes d'engrenages 111 et 112, l'arbre de liaison 11L, le crabot 12 et la roue libre 13a, agencés de la même façon. Le générateur 6a est alors monté directement sur l'arbre de liaison 11L et le générateur 6b est entraîné sur un pignon d'engrenage supplémentaire 11 P. Alternativement, le crabot 12 peut être placé sur une ligne de liaison différente de la liaison 11L, afin de n'entraîner qu'une seule machine électrique au sol.

Les figures 5a à 5d illustrent quatre phases de fonctionnement du réducteur 11a : lorsque le groupe APU 3 est allumé au sol alors que les moteurs principaux 5a/5b sont éteints (figure 5a), lorsque le groupe APU 3 et les moteurs principaux 5a/5b sont allumés au sol ou en vol (figure 5b), lorsque le groupe APU 3 est éteint et les moteurs principaux 5a/5b allumés en vol (figure 5c), et lorsque le groupe APU 3 est allumé et un moteur principal est en panne ou en défaillance partielle (figure 5d).

En référence à la figure 5a, l'arbre de liaison 11L est découplé et le groupe APU 3 fournit de la puissance mécanique (flèche F1) aux équipements 15 ainsi qu'au moto-générateur 7 d'alimentation du réseau électrique de bord 2 et de l'électronique de puissance 9 (figure 4a).

En référence à la figure 5b, le groupe APU 3 fournit toujours de la puissance mécanique (flèche F1) à ses équipements 15 et au générateur du moto- générateur 7 (si le besoin de puissance supplémentaire est exprimé, par exemple pour le réseau de bord) via la ligne d'engrenages 112. Le crabot 12 étant enclenché (flèche F2), le groupe APU 3 peut également fournir de la puissance mécanique propulsive -via la ligne d'engrenages 111- à la prise de mouvement 11M de l'ensemble BTP 40 / RAC 4 (flèche F3) pour fournir de la puissance propulsive en particulier au rotor RAC 4, ainsi qu'aux générateurs 6a et 6b (flèches F4) pour fournir de la puissance électrique au réseau de bord. Les moteurs principaux 5a/5b étant allumés, la BTP 40, entraînée également par ces moteurs 5a/5b, peut également transmettre de la puissance aux générateurs 6a/6b.

En référence à la figure 5c, le groupe APU 3 étant éteint mais les moteurs 5a/5b allumés, le RAC 4 est entraîné (flèche f3) par la BTP 40, elle-même entraînée par les moteurs 5a/5b et transmet alors de la puissance aux générateurs 6a et 6b (flèches F4) pour fournir la puissance non propulsive au réseau de bord 2, mais ne transmet pas de puissance au groupe APU 3 puisque la roue libre 13a est déconnectée.

En référence à la figure 5d, un moteur principal étant au ralenti ou arrêté (volontairement ou involontairement) et le crabot 12 enclenché (flèche F2), le groupe APU 3 fournit sur la ligne d'engrenages 112, via l'arbre de liaison 11L, toute la puissance non propulsive et partie de la puissance propulsive (la flèche F5 en traits pointillés indique que le prélèvement sur la BTP 40 est alors réduit, augmentant ainsi la puissance sur le rotor principal 41), à savoir :
- de la puissance mécanique (flèche F1) aux équipements 15 et au générateur du moto-générateur 7 (si besoin),
- de la puissance propulsive à la prise de mouvement 11M de l'ensemble BTP 40 / RAC 4 (flèche F3), en particulier au RAC 4 et éventuellement au rotor principal 41, ainsi que
- de la puissance non propulsive aux générateurs 6a et 6b (flèches F4) pour fournir de la puissance électrique.

Une variante de la configuration précédente, illustrée par les figures 6a et 6b, reprend les mêmes schémas que les figures 4a et 4b. Mais la configuration d'architecture de la figure 6a présente un système de conversion d'énergie constituée uniquement par les générateurs 6a et 6b, couplés à un ensemble réducteur 11b, c'est-à-dire sans le moto-générateur 7 des figures 3a/3b et 4a/4b. Un démarreur spécifique 8a comportant une roue libre (non représentée) activé par la batterie 8b est donc utilisé. Alternativement, ce démarreur 8a peut être remplacé par une machine réversible à courant continu ou à courant alternatif afin de répondre à un besoin supplémentaire (sécurité, fiabilité, niveau de puissance, etc.). Cette machine électrique sera uniquement entraînée par le groupe APU.

En référence à la figure 6b, l'arbre de liaison 11L est équipé du **crabot** réversible 12 et de la roue libre 13a pour entraîner la prise de mouvement 11M de l'ensemble BTP 40 / RAC 4, à l'instar de l'arbre de liaison 11L (figures 3b et 4b). L'arbre de liaison 11N entraîne également, sur une troisième ligne d'engrenages 113, les générateurs 6a et 6b via des pignons d'engrenage 11 P. La troisième ligne d'engrenages 113 est montée via des roues libres 13b et 13c respectivement sur l'arbre de liaison 11L et sur un deuxième arbre de liaison 11N entre un générateur 6b et le groupe APU 3.

Les générateurs 6a et 6b du groupe APU 3 sont utilisés au sol en mode APU classique, ce qui permet avec cette configuration de mutualiser les fonctions de génération électrique.

L'ensemble réducteur 11b présente les mêmes avantages que l'ensemble 11a tels que présentés ci-dessus, en particulier le rotor principal n'est pas entraînable au sol, et le moteur auxiliaire (groupe APU 3) n'est pas entraînable par le rotor principal en vol. De plus, les générateurs 6a et 6b de conversion d'énergie sont entraînés par le moteur auxiliaire au sol lorsque les moteurs sont éteints, et par la BTP au sol ou en vol lorsque le moteur auxiliaire est éteint (ou encore lorsque sa vitesse de rotation est inférieure à la vitesse de l'arbre 11L, les roues libres 13a et 13c étant alors déclenchées).

Plus particulièrement, les schémas des figures 7a à 7d illustrent les mêmes quatre phases de fonctionnement des figures 5a à 5d lorsque l'ensemble réducteur est du type 11b, illustré en figure 6b.

En référence à la figure 7a, l'arbre de liaison 11L est découplé et le groupe APU 3 fournit de la puissance mécanique (flèches F1) aux équipements 15 et à la machine réversible 8 dans le but de fournir de l'énergie électrique en cas de besoin, ainsi que de la puissance électrique via les générateurs 6a et 6b par le deuxième arbre de liaison 11N (flèches F6). Si la machine 8 est un simple démarreur, une roue libre est avantageusement intégrée pour éviter de l'entraîner inutilement.

En référence à la figure 7b, le groupe APU 3 fournit toujours de la puissance mécanique (flèches F1) à ses équipements 15 et à la machine réversible 8 (en cas de besoin) via la ligne d'engrenages 111. Le crabot 12 étant enclenché (flèche F2), le groupe APU 3 peut également fournir de la puissance mécanique propulsive -via la ligne d'engrenages 112- à la prise de mouvement 11M de l'ensemble BTP 40 / RAC 4 (flèche F3) pour fournir de la puissance propulsive en particulier au rotor RAC 4. Le groupe APU 3 peut également fournir de la puissance mécanique aux générateurs 6a et 6b (flèches F4) via la ligne d'engrenages 113 pour délivrer de la puissance électrique au réseau de bord 2. Le groupe APU 3 peut également fournir directement de la puissance aux générateurs 6a et 6b via l'arbre de liaison 11 N, en particulier lorsque le crabot 12 est déconnecté. Mais les moteurs principaux 5a/5b étant allumés, la BTP 40, entraînée par ces moteurs 5a/5b, peut également transmettre de la puissance aux générateurs 6a et 6b (flèche F7).

En référence à la figure 7c, le groupe APU 3 étant éteint mais les moteurs 5a/5b allumés, la BTP 40 -entraînée par les moteurs 5a/5b- transmet alors de la puissance aux générateurs 6a et 6b (flèches F7) pour fournir la puissance non propulsive au réseau de bord 2, mais ne transmet pas de puissance au groupe APU 3 car les roues libres 13a et 13b sont déconnectées.

En référence à la figure 7d, un moteur principal 5a étant au ralenti (flèche F5 en traits pointillés) ou arrêté (volontairement ou involontairement) et le crabot 12 enclenché, le groupe APU 3 fournit de la puissance mécanique (flèche F1) aux équipements 15 et à la machine réversible 8 (en cas de besoin), de la puissance propulsive à la prise de mouvement 11M de l'ensemble BTP 40 / RAC 4 (flèches F3) -en particulier au RAC 4 et éventuellement au rotor principal 41-ainsi qu'aux générateurs 6a et 6b (flèches F4) pour fournir de la puissance électrique au réseau de bord 2. Ainsi, le groupe APU 3 fournit sur les lignes d'engrenages 112 et 113 toute la puissance non propulsive et partie de la puissance propulsive. Le groupe APU 3 peut également fournir directement de la puissance aux générateurs 6a et 6b via l'arbre de liaison 11N (flèche F8), en particulier lorsque le crabot 12 est déconnecté.

Les architectures précédentes ont un moteur auxiliaire du type groupe APU, disposant d'un arbre unique de puissance (par exemple : moteur diesel ou turbine liée). Pour un moteur auxiliaire ayant une turbine libre de puissance du type moteur principal, deux arbres de puissance sont disponibles : l'arbre de la turbine libre et l'arbre du générateur de gaz. Deux architectures d'ensembles réducteurs 11c et 11d sont décrites ci-dessous en référence aux figures 8a et 8b pour illustrer la prise de puissance à partir des deux arbres d'une turbine à gaz à turbine libre 10 en tant que moteur auxiliaire.

Dans ces figures 8a et 8b, les ensembles réducteurs 11c et 11d sont respectivement sans et avec un crabot 12, comme moyen de couplage réversible de l'arbre 10L de la turbine libre 100. Le schéma du réducteur de la figure 8a reprend celui de la figure 4b, avec deux lignes d'engrenages 111 et 112, et celui de la figure 8b reprend le schéma de réducteur 6b, avec trois lignes d'engrenages 111 à 113.

En référence à la figure 8a, l'ensemble réducteur 11c est à double ligne d'engrenages 111 et 112. L'arbre 10L de la turbine libre 100 entraîne les générateurs 6a et 6b sur la deuxième ligne d'engrenages 112, via l'arbre de liaison 11L monté avec la roue libre 13a. L'arbre de liaison 11L ne dispose pas de système de débrayage, mais de la roue libre 13a pour éviter l'entraînement de la turbine libre 100 par la BTP 40. L'arbre 10L est monté sur une portion 111a de la première ligne d'engrenages 111 via un frein 17. L'arbre 10G du générateur de gaz 101 de la turbine à gaz 10 est monté sur une portion 111b de la première ligne d'engrenages 111, indépendante de la portion 111a. L'arbre 10G entraîne sur cette ligne 111b les équipements 15 et le générateur du moto-générateur 7, indépendamment de la turbine libre 100.

Le frein 17 permet de bloquer l'arbre 10L de la turbine libre au sol afin d'utiliser la turbine à gaz 10 en fonctionnement classique d'un groupe APU (mode APU : génération électrique par le moto-générateur 7 et génération pneumatique par un compresseur de charge sur l'arbre 10G du générateur de gaz, etc.). Ce frein 17 peut être avantageusement mutualisé avec le frein de l'arbre du rotor RAC 4. Cette architecture se rapproche d'une architecture hélicoptère trimoteur dont le troisième moteur -formant le moteur auxiliaire- serait dissymétrique en puissance par rapport aux deux autres.

L'architecture de l'ensemble réducteur 11d, illustré à la figure 8b, reprend tous les éléments de l'ensemble réducteur 11b de la figure 6b avec les mêmes fonctions. La différence de structure se rapporte à l'indépendance des liaisons de l'arbre 10L de la turbine libre 100 de la turbine à gaz 10, monté sur la portion 111a, et de l'arbre 10G du générateur de gaz 101 de cette turbine à gaz 10, monté sur la portion 111b. La turbine à gaz 10 remplace dans cette architecture le groupe APU 3 de la figure 6b en tant que moteur auxiliaire. En particulier, la troisième ligne d'engrenages 113 est montée avec une roue libre 13b sur l'arbre de liaison 11L équipé d'un crabot réversible 12 ou équivalent et de la roue libre 13a, ainsi que sur le deuxième arbre de liaison 11N avec une roue libre 13c, entre l'arbre 10L de la turbine libre 100 et le générateur 6a d'alimentation électrique.

Ainsi, les accessoires (équipements 15 : pompe, compresseur de charge, etc., et démarreur 8a) connectés sur le générateur de gaz 101 sont séparés des accessoires (générateurs 6a et 6b et équipements hélicoptère : BTP 40, RAC 4, etc.) connectés sur la turbine libre 100.

Une régulation du moteur auxiliaire à turbine libre sera différente de celle du moteur à turbine liée lorsque le moteur auxiliaire est connecté à l'ensemble de prise BTP / RAC car ce RAC est alors lié à la turbine libre 10 et non au générateur de gaz 101.

L'invention n'est pas limitée aux exemples décrits et représentés, en particulier les roues libres peuvent être remplacées par des moyens équivalents (manchon découpleur, couplage visqueux, train épicycloïdale, etc.) ou les différents composants (roue libre, crabot..) peuvent être placés différemment sur les différentes lignes de pignons. La portée de la terminologie « moteur auxiliaire » s'étend aux moteurs de technologie différente de celle d'une turbine à gaz (par exemple : moteur diesel, pile à combustible, etc.). Ainsi, ce moteur auxiliaire peut être le moteur d'un hélicoptère tri-turbine de dimensions et de performance inférieures à celles des deux autres moteurs principaux.

## Revendications

1. Procédé d'apport d'énergie propulsive et/ou non propulsive dans une architecture d'hélicoptère comportant un réseau électrique de bord (2), une motorisation principale (5a, 5b) couplée à un système de transmission mécanique (11a à 11d, 40) qui entraîne en vol des organes de propulsion (41, 4), dans lequel un système de conversion d'énergie mécanique / électrique (6, 6a, 6b, 7, 8, 8a, 8b) couplé au système de transmission mécanique (11a à 11d, 40) et/ou à la motorisation principale (5a, 5b) fournit de l'énergie non propulsive au réseau électrique de bord (2), le procédé consistant à coupler par conversion d'énergie un moteur auxiliaire supplémentaire (3, 10, 30) au réseau de bord (2), pour pouvoir lui fournir, au sol, de l'énergie non propulsive ainsi qu'à la motorisation principale (5a, 5b) pour son démarrage, et pour pouvoir fournir, en vol, de l'énergie non propulsive au réseau de bord (2), en complément et jusqu'au remplacement du prélèvement effectué sur le système de transmission mécanique (11a à 11d, 40) et/ou la motorisation principale (5a, 5b), le moteur auxiliaire (3, 10, 30) étant en outre apte à fournir également de l'énergie électrique à une motorisation dédiée (7, 8a) sur le système de transmission mécanique (11a à 11d, 40) pour augmenter ou fournir partiellement la puissance propulsive.

2. Procédé d'apport d'énergie selon la revendication 1, dans lequel le moteur auxiliaire (3, 10, 30) peut également ou alternativement être couplé directement à un système de réduction de vitesse (11a à 11d) pour fournir de l'énergie propulsive au système de transmission mécanique (11a à 11d , 40), puis couplé via un système de conversion d'énergie réversible (6, 6a, 6b, 7, 8, 8a, 8b) au réseau de bord (2) pour fournir de l'énergie non propulsive, ainsi qu'à la motorisation principale (5a, 5b) pour son démarrage, le moteur auxiliaire (3, 10, 30) pouvant alors fournir de l'énergie propulsive à au moins un organe de propulsion (41, 4).

3. Procédé d'apport d'énergie selon la revendication précédente, dans lequel l'énergie électrique du réseau de bord (2) provient d'une modulation entre l'énergie prélevée sur le système de transmission mécanique (40, 11a à 11d), et la motorisation principale (5a, 5b) via le système de conversion d'énergie (6, 6a, 6b, 7, 8, 8a, 8b).

4. Procédé d'apport d'énergie selon la revendication 3, dans lequel le système de conversion d'énergie (6, 6a, 6b, 7, 8, 8a, 8b) n'est connecté qu'au système de réduction (11a) de sorte que l'énergie électrique du réseau de bord (2) ne provient que du moteur auxiliaire (3, 10, 30) via le système de réduction (11a) lorsque la motorisation principale (5a, 5b) est éteinte.

5. Procédé d'apport d'énergie selon la revendication 3, dans lequel le moteur auxiliaire (3, 10, 30) est intégré directement à une boîte de transmission principale BTP (40) du système de transmission mécanique (11a à 11d, 40) de sorte qu'il fournisse de l'énergie électrique au réseau de bord (2) par conversion d'énergie avec des générateurs (6) du système de conversion d'énergie (6, 6a, 6b, 7, 8, 8a, 8b) situés sur la BTP (40) et de l'énergie propulsive à au moins un organe de propulsion (4, 41) via la BTP (40).

6. Configuration d'apport d'énergie propulsive et/ou non propulsive dans un hélicoptère apte à mettre en œuvre le procédé selon l'une des revendications précédentes, comportant :
- deux moteurs principaux (5a, 5b) comportant des démarreurs (8),
- des moyens de réception d'énergie électrique comportant un réseau électrique de bord (2) et une électronique de puissance (9) en liaison avec les démarreurs (8), et
- un système de conversion d'énergie mécanique / électrique (6, 6a, 6b, 7) situé entre une boite de transmission principale BTP (40) d'un système de transmission mécanique (11a à 11d, 40) aux organes de propulsion (4, 41) et les moyens de réception d'énergie électrique,
- un moteur auxiliaire de puissance (3, 10, 30) de fourniture d'énergie électrique aux moyens de réception d'énergie électrique (2, 9) via le système de conversion d'énergie (6, 6a, 6b, 7, 8, 8a, 8b) et des moyens de couplage mécanique (11a à 11d) entre le moteur auxiliaire (3, 10, 30) et au moins un organe de propulsion (4, 41), et
- le moteur auxiliaire de puissance (3, 10, 30) étant en outre apte à fournir également de l'énergie électrique à une motorisation dédiée (7, 8a) sur le système de transmission mécanique (11a à 11d, 40) pour augmenter ou fournir partiellement la puissance propulsive.

7. Configuration d'apport d'énergie selon la revendication précédente, dans laquelle le moteur auxiliaire (3, 10, 30) est choisi parmi un groupe APU, une turbine à gaz à turbine libre ou liée, un moteur diesel.

8. Configuration d'apport d'énergie selon la revendication 7, dans laquelle le système de conversion d'énergie comporte (6, 6a, 6b, 7, 8, 8a, 8b) des générateurs (6, 6a, 6b) ou des groupes moto-générateurs réversibles (7) en connexion avec la BTP (40) et/ou les moteurs principaux (5a, 5b) et/ou le moteur auxiliaire (3, 10, 30) pour fournir de l'énergie électrique au réseau de bord (2) et à l'électronique de puissance (9).

9. Configuration d'apport d'énergie selon l'une des revendications 7 ou 8, dans laquelle la connexion entre le moteur auxiliaire (3, 10, 30) et au moins l'un des organes de propulsion (4, 41) est réalisée par un moteur (8a) dédié sur cet organe (4, 41) et/ou des moteurs de moto-générateurs (7) dédiés à la BTP (40) via l'électronique de puissance (9) activée par le système de conversion d'énergie (6, 6a, 6b, 7, 8, 8a, 8b) lié au moteur auxiliaire (3, 10, 30).

10. Configuration d'apport d'énergie selon l'une des revendications 8 ou 9, dans laquelle le moteur auxiliaire (3, 10, 30) est intégré sur la BTP (40) en liaison avec des générateurs (6) du système de conversion d'énergie comporte (6, 6a, 6b, 7, 8, 8a, 8b) pour fournir de l'énergie non propulsive, le moteur auxiliaire (3, 10, 30) étant apte à fournir de l'énergie non propulsive au réseau de bord (2) et à l'électronique de puissance (9) via les générateurs (6) sur la BTP (40) et de l'énergie propulsive via la BTP (40) à au moins un organe de propulsion (4, 41).

11. Configuration d'apport d'énergie selon l'une des revendications 8 ou 9, dans laquelle la connexion entre le moteur auxiliaire (3, 10, 30) et le système de conversion d'énergie (6a, 6b, 7, 8, 8a, 8b) est réalisée via un ensemble réducteur (11a à 11d) appartenant au système de transmission mécanique (11a à 11d, 40).

12. Configuration d'apport d'énergie selon la revendication précédente, dans laquelle, le système de transmission mécanique (11a à 11d, 40) comporte un ensemble réducteur (11a à 11d), cet ensemble réducteur (11a à 11d) connectant directement le moteur auxiliaire (3, 10) à la BTP (40) et/ou à un arbre d'entraînement (4A) du rotor anti-couple (4), et le moteur auxiliaire (3, 10) à un moto-générateur (7) et/ou à au moins un générateur (6, 6a, 6b) formant partiellement ou en totalité le système de conversion d'énergie (6a, 6b, 7, 8, 8a, 8b) pour fournir de l'énergie électrique au réseau de bord (2) et à l'électronique de puissance (9).

13. Configuration d'apport d'énergie selon la revendication 12, dans laquelle l'ensemble réducteur (11a à 11d) comporte au moins deux lignes d'engrenages de réduction de vitesse (111 à 113) couplées par au moins un arbre de liaison (11L, 11N) entre le moteur auxiliaire (3, 10, 30) monté sur la première ligne (111) et une prise de mouvement (11M) sur la BTP (40) ou le RAC (4) montés sur la deuxième ligne (112), et dans lequel au moins un arbre de liaison (11L) est équipé d'un moyen de découplage réversible (12) et d'une roue libre (13a) pour que, respectivement, le moteur auxiliaire (3, 10) n'entraîne pas le rotor principal (41) au sol et que le rotor principal (41) n'entraîne pas le moteur auxiliaire (3, 10, 30) au sol ou en vol.

14. Configuration d'apport d'énergie selon la revendication précédente, dans laquelle, dans le cas où le(s) générateur(s) (6a, 6b) du système de conversion d'énergie (6a, 6b, 7, 8, 8a, 8b) est (sont) connecté(s) directement à l'ensemble réducteur (11a, 11b), l'arbre de liaison (11L) équipé du moyen de découplage réversible (12) et de la roue libre (13a) entraîne la prise de mouvement (11M) et le(s) générateur(s) (6a, 6b) montés via une roue libre (13b) sur la deuxième ligne d'engrenages (113) et/ou sur au moins un deuxième arbre de liaison (11 N) équipé d'une roue libre (13c) entre un générateur (6a) et le moteur auxiliaire (3, 10, 30).

15. Configuration d'apport d'énergie selon la revendication 13, dans laquelle, dans le cas où le moteur auxiliaire (3,10, 30) possède une turbine libre (100), la turbine libre (100) entraîne le(s) générateur(s) (6a, 6b) sur la deuxième ligne d'engrenages (112) du réducteur (11c, 11d) par un arbre de liaison équipé d'une roue libre (13a) et d'un frein (17) ou sur une troisième ligne d'engrenages (113) montée avec une roue libre (13b) sur un arbre de liaison (11L) équipé d'un moyen de découplage réversible (12) et d'une roue libre (13a), ainsi que sur au moins un deuxième arbre de liaison (11N) monté avec une roue libre (13c) entre la turbine libre (100) et un générateur (6a).

## Patentansprüche

1. Verfahren zur Versorgung mit Antriebsenergie und/oder Nicht-Antriebsenergie in einem Hubschrauberaufbau, umfassend ein Bordstromnetz (2), eine Hauptmotorisierung (5a, 5b), die mit einem mechanischen Übertragungssystem (11a bis 11d, 40) gekoppelt ist, das im Flug Antriebsorgane (41, 4) antreibt, wobei ein Umwandlungssystem mechanische/elektrische Energie (6, 6a, 6b, 7, 8, 8a, 8b), das mit dem mechanischen Übertragungssystem (11a bis 11d, 40) und/oder mit der Hauptmotorisierung (5a, 5b) gekoppelt ist, Nicht-Antriebsenergie zu dem Bordstromnetz (2) liefert, wobei das Verfahren darin besteht, durch Energieumwandlung einen zusätzlichen Hilfsmotor (3, 10, 30) mit dem Bordstromnetz (2) zu koppeln, um ihm auf dem Boden Nicht-Antriebsenergie zu liefern, sowie mit der Hauptmotorisierung (5a, 5b) für ihr Starten, und um im Flug Nicht-Antriebsenergie zu dem Bordstromnetz (2) als Ergänzung zu liefern, und bis zum Ersetzen der Entnahme, die auf dem mechanischen Übertragungssystem (11a bis 11d, 40) und/oder der Hauptmotorisierung (5a, 5b) vorgenommen wird, wobei der Hilfsmotor (3, 10, 30) weiter geeignet ist, auch elektrische Energie zu einer dedizierten Motorisierung (7, 8a) auf dem mechanischen Übertragungssystem (11a bis 11d, 40) zu liefern, um die Antriebsleistung zu erhöhen oder teilweise zu liefern.

2. Verfahren zur Energieversorgung nach Anspruch 1, wobei der Hilfsmotor (3, 10, 30) auch oder alternativ direkt mit einem Drehzahluntersetzungssystem (11a bis 11d) gekoppelt werden kann, um Antriebsenergie zu dem mechanischen Übertragungssystem (11a bis 11d, 40) zu liefern, dann über ein umkehrbares Energieumwandlungssystem (6, 6a, 6b, 7, 8, 8a, 8b) mit dem Bordnetz (2) gekoppelt werden kann, um Nicht-Antriebsenergie zu liefern, sowie mit der Hauptmotorisierung (5a 5b) für ihr Starten, wobei der Hilfsmotor (3, 10, 30) dabei Antriebsenergie zu mindestens einem Antriebsorgan (41, 4) liefern kann.

3. Verfahren zur Energieversorgung nach dem vorstehenden Anspruch, wobei die elektrische Energie des Bordnetzes (2) von einer Modulation zwischen der Energie, die auf dem mechanischen Übertragungssystem (40, 11a bis 11d) entnommen wird, und der Hauptmotorisierung (5a, 5b) über das Energieumwandlungssystem (6, 6a, 6b, 7, 8, 8a, 8b) kommt.

4. Verfahren zur Energieversorgung nach Anspruch 3, wobei das Energieumwandlungssystem (6, 6a, 6b, 7, 8, 8a, 8b) nur mit dem Untersetzungssystem (11a) derart verbunden ist, dass die elektrische Energie des Bordnetzes (2) nur von dem Hilfsmotor (3, 10, 30) über das Untersetzungssystem (11a) kommt, wenn die Hauptmotorisierung (5a, 5b) abgestellt ist.

5. Verfahren zur Energieversorgung nach Anspruch 3, wobei der Hilfsmotor (3, 10, 30) direkt in ein Hauptschaltgetriebe BTP (40) des mechanischen Übertragungssystems (11a bis 11d, 40) derart integriert ist, dass er elektrische Energie zu dem Bordnetz (2) durch Energieumwandlung mit Generatoren (6) des Energieumwandlungssystems (6, 6a, 6b, 7, 8, 8a, 8b), die sich auf dem BTP (40) befinden, und Antriebsenergie zu mindestens einem Antriebsorgan (4, 41) über das BTP (40) liefert.

6. Konfiguration zur Versorgung mit Antriebsenergie und/oder Nicht-Antriebsenergie in einem Hubschrauber, die geeignet ist, das Verfahren nach einem der vorstehenden Ansprüche umzusetzen, die Folgendes umfasst:
- zwei Hauptmotoren (5a, 5b), die Anlasser (8) umfassen,
- Mittel zum Empfangen elektrischer Energie, die ein Bordstromnetz (2) und eine Leistungselektronik (9) in Verbindung mit den Anlassern (8) umfassen, und
- ein Umwandlungssystem mechanische/elektrische Energie (6, 6a, 6b, 7), das zwischen einem Hauptschaltgetriebe BTP (40) eines mechanischen Übertragungssystems (11a bis 11d, 40) zu den Antriebsorganen (4, 41) und den Mitteln zum Empfangen elektrischer Energie liegt,
- einen Hilfsleistungsmotor (3, 10, 30) zum Liefern elektrischer Energie zu den Mitteln zum Empfangen elektrischer Energie (2, 9) über das Energieumwandlungssystem (6, 6a, 6b, 7, 8, 8a, 8b) und Mittel zum mechanischen Koppeln (11a bis 11d) zwischen dem Hilfsmotor (3, 10, 30) und mindestens einem Antriebsorgan (4, 41),
wobei der Hilfsleistungsmotor (3, 10, 30) weiter geeignet ist, auch elektrische Energie zu einer dedizierten Motorisierung (7, 8a) auf dem mechanischen Übertragungssystem (11a bis 11d, 40) zu liefern, um die Antriebsleistung zu erhöhen oder teilweise zu liefern.

7. Konfiguration zur Energieversorgung nach dem vorstehenden Anspruch, wobei der Hilfsmotor (3, 10, 30) aus einer APU-Gruppe, einer Gasturbine mit freier oder verbundener Turbine, einem Dieselmotor ausgewählt ist.

8. Konfiguration zur Energieversorgung nach Anspruch 7, wobei das Energieumwandlungssystem (6, 6a, 6b, 7, 8, 8a, 8b) Generatoren (6, 6a, 6b) oder umkehrbare Motor-Generatorgruppen (7) in Verbindung mit dem BTP (40) und/oder den Hauptmotoren (5a, 5b) und/oder dem Hilfsmotor (3, 10, 30) umfasst, um elektrische Energie zu dem Bordnetz (2) und zu der Leistungselektronik (9) zu liefern.

9. Konfiguration zur Energieversorgung nach einem der Ansprüche 7 oder 8, wobei die Verbindung zwischen dem Hilfsmotor (3, 10, 30) und mindestens einem der Antriebsorgane (4, 41) durch einen dedizierten Motor (8a) auf diesem Organ (4, 41) und/oder Motoren von Motor-Generatoren (7), die dem BTP (40) dediziert sind, über die Leistungselektronik (9), die von dem Energieumwandlungssystem (6, 6a, 6b, 7, 8, 8a, 8b) aktiviert wird, das mit dem Hilfsmotor (3, 10, 30) verbunden ist, hergestellt ist.

10. Konfiguration zur Energieversorgung nach einem der Ansprüche 8 oder 9, wobei der Hilfsmotor (3, 10, 30), der auf dem BTP (40) in Verbindung mit Generatoren (6) des Energieumwandlungssystems (6, 6a, 6b, 7, 8, 8a, 8b) integriert ist, um Nicht-Antriebsenergie zu liefern, wobei der Hilfsmotor (3, 10, 30) geeignet ist, Nicht-Antriebsenergie zu dem Bordnetz (2) und zu der Leistungselektronik (9) über die Generatoren (6) auf dem BTP (40) zu liefern, und Antriebsenergie über das BTP (40) zu mindestens einem Antriebsorgan (4, 41).

11. Konfiguration zur Energieversorgung nach einem der Ansprüche 8 oder 9, wobei die Verbindung zwischen dem Hilfsmotor (3, 10, 30) und dem Energieumwandlungssystem (6a, 6b, 7, 8, 8a, 8b) über eine Untersetzungseinheit (11a bis 11d), die zu dem mechanischen Übertragungssystem (11a bis 11d, 40) gehört, hergestellt ist.

12. Konfiguration zur Energieversorgung nach dem vorstehenden Anspruch, wobei das mechanische Übertragungssystem (11a bis 11d, 40) eine Untersetzungseinheit (11a bis 11d) umfasst, wobei diese Untersetzungseinheit (11a bis 11d) den Hilfsmotor (3, 10) direkt mit dem BTP (40) und/oder mit einer Antriebswelle (4A) des Heckrotors (4) verbindet, und den Hilfsmotor (3, 10) mit einem Motor-Generator (7) und/oder mit mindestens einem Generator (6, 6a, 6b), der teilweise oder vollständig das Energieumwandlungssystem (6a, 6b, 7, 8, 8a, 8b) bildet, um elektrische Energie zu dem Bordnetz (2) und zu der Leistungselektronik (9) zu liefern.

13. Konfiguration zur Energieversorgung nach Anspruch 12, wobei die Untersetzungseinheit (11a bis 11d) mindestens zwei Drehzahluntersetzungs-Rädergetriebelinien (111 bis 113) umfasst, die durch mindestens eine Verbindungswelle (11L, 11N) zwischen dem Hilfsmotor (3, 10, 30), der auf die erste Linie (111) montiert ist, und einer Zapfwelle (11M) auf dem BTP (40) oder dem Heckrotor RAC (4), die auf der zweiten Linie (112) montiert sind, gekoppelt sind, und wobei mindestens eine Verbindungswelle (11L) mit einem umkehrbaren Abkoppelmittel (12) und einem freien Rad (13a) ausgestattet ist, damit jeweils der Hilfsmotor (3, 10) den Hauptrotor (41) auf dem Boden nicht antreibt, und der Hauptrotor (41) den Hilfsmotor (3, 10, 30) auf dem Boden oder im Flug nicht antreibt.

14. Konfiguration zur Energieversorgung nach dem vorstehenden Anspruch, wobei in dem Fall, dass der (die) Generator(en) (6a, 6b) des Energieumwandlungssystems (6a, 6b, 7, 8, 8a, 8b) direkt mit der Untersetzungseinheit (11a, 11b) verbunden ist (sind), die Verbindungswelle (11L), die mit dem umkehrbaren Abkoppelmittel (12) und dem freien Rad (13a) ausgestattet ist, die Zapfwelle (11M) und den (die) Generator(en) (6a, 6b) antreibt, die über ein freies Rad (13b) auf der zweiten Rädergetriebelinie (113) und/oder auf mindestens einer zweiten Verbindungswelle (11N), die mit einem freien Rad (13c) ausgestattet ist, zwischen einem Generator (6a) und dem Hilfsmotor (3, 10, 30) montiert sind.

15. Konfiguration zur Energieversorgung nach Anspruch 13, wobei in dem Fall, dass der Hilfsmotor (3,10, 30) eine freie Turbine (100) besitzt, die freie Turbine (100) den (die) Generator(en) (6a, 6b) auf der zweiten Rädergetriebelinie (112) des Untersetzungsgetriebes (11c, 11d) durch eine Verbindungswelle antreibt, die mit einem freien Rad (13a) und einer Bremse (17) ausgestattet ist, oder auf einer Rädergetriebelinie (113), die mit einem freien Rad (13b) auf einer Verbindungswelle (11L) montiert ist, die mit einem umkehrbaren Abkoppelmittel (12) und einem freien Rad (13a) ausgestattet ist, sowie auf mindestens einer zweiten Verbindungswelle (11N), die mit einem freien Rad (13c) zwischen der freien Turbine (100) und einem Generator (6a) montiert ist.

## Claims

1. Method for supplying propulsive and/or non-propulsive power in a helicopter architecture comprising an on-board power supply network (2), a main traction system (5a, 5b) coupled to a mechanical transmission system (11a to 11d, 40) which drives propulsion members (41, 4) during flight, wherein a system for converting mechanical/electrical energy (6, 6a, 6b, 7, 8, 8a, 8b) coupled to the mechanical transmission system (11a to 11d, 40) and/or to the main traction system (5a, 5b) provides non-propulsive power to the on-board power supply network (2), the method consisting of coupling, by means of energy conversion, an additional auxiliary engine (3, 10, 30) to the on-board network (2), in order to provide said network, on the ground, with non-propulsive power, as well as to the main traction system (5a, 5b) for its start-up, and in order to be able to provide, during flight, non-propulsive power to the on-board network (2), in addition to and ultimately instead of the drawing-off carried out on the mechanical transmission system (11a to 11d, 40) and/or the main traction system (5a, 5b), the auxiliary engine (3, 10, 30) additionally being capable of also providing electrical energy to a dedicated traction system (7, 8a) on the mechanical transmission system (11a to 11d, 40) in order to increase or partially provide the propulsive power.

2. Method for supplying energy according to claim 1, wherein the auxiliary engine (3, 10, 30) can additionally or alternatively be coupled directly to a speed-reduction system (11a to 11d) in order to provide propulsive power to the mechanical transmission system (11a to 11d, 40), then coupled via a reversible system for converting energy (6, 6a, 6b, 7, 8, 8a, 8b) to the on-board network (2) in order to also provide non-propulsive power to the main traction system (5a, 5b) for its start-up, the auxiliary engine (3, 10, 30) then being able to provide propulsive power to at least one propulsion unit (41, 4).

3. Method for supplying energy according to the preceding claim, wherein the electrical energy from the on-board network (2) comes from an adjustment between the energy drawn off on the mechanical transmission (40, 11a to 11d) and the main traction system (5a, 5b) via the system for converting energy (6, 6a, 6b, 7, 8, 8a, 8b).

4. Method for supplying energy according to claim 3, wherein the energy conversion system (6, 6a, 6b, 7, 8, 8a, 8b) is connected only to the reduction system (11a) such that the electrical energy of the on-board network (2) only comes from the auxiliary engine (3, 10, 30) via the reduction system (11a) when the main traction system (5a, 5b) is switched off.

5. Method for supplying energy according to claim 3, wherein the auxiliary engine (3, 10, 30) is integrated directly in the main gearbox MGB (40) of the system for mechanical transmission (11a to 11d, 40) such that it provides electrical energy to the on-board network (2) by converting energy with generators (6) of the system for converting energy (6, 6a, 6b, 7, 8, 8a, 8b) on the MGB (40), and provides propulsive power to at least one propulsion member (4, 41) via the MGB (40).

6. Configuration for supplying propulsive and/or non-propulsive power in a helicopter capable of implementing the method according to one of the preceding claims, comprising:
- two main engines (5a, 5b) comprising starters (8),
- means for receiving electrical energy comprising an on-board network (2) and power electronics (9) in conjunction with the starters (8), and
- a mechanical/electrical energy conversion system (6, 6a, 6b, 7) located between a main gearbox MGB (40) of a system for mechanical transmission (11a to 11d, 40) to the propulsion members (4, 41) and the means for receiving electrical energy,
- an auxiliary power engine (3, 10, 30) for providing electrical energy to the means for receiving electrical energy (2, 9) via the energy conversion system (6, 6a, 6b, 7, 8, 8a, 8b) and means for mechanical coupling (11a to 11d) between the auxiliary engine (3, 10, 30) and at least one propulsion member (4, 41),
the auxiliary power engine (3, 10, 30) being furthermore able to also provide electrical energy to a dedicated traction system (7, 8a) on the mechanical transmission system (11a to 11d, 40) in order to increase or partially provide the propulsive power.

7. Configuration for supplying energy according to the preceding claim, wherein the auxiliary engine (3, 10, 30) is selected from an APU unit, a free-turbine or connected-turbine gas turbine and a diesel engine.

8. Configuration for supplying energy according to claim 7, wherein the energy conversion system (6, 6a, 6b, 7, 8, 8a, 8b) comprises generators (6, 6a, 6b) or reversible motor generator units (7) connected to the MGB (40) and/or the main engines (5a, 5b) and/or the auxiliary engine (3, 10, 30) in order to provide electrical energy to the on-board network (2) and to the power electronics (9).

9. Configuration for supplying energy according to one of claims 7 or 8, wherein the connection between the auxiliary engine (3, 10, 30) and at least one of the propulsion members (4, 41) is produced by a dedicated motor (8a) on this member (4, 41) and/or motors of motor generators (7) dedicated to the MGB (40) via the power electronics (9) activated by the energy conversion system (6, 6a, 6b, 7, 8, 8a, 8b) connected to the auxiliary engine (3, 10, 30).

10. Configuration for supplying energy according to one of claims 8 or 9, wherein the auxiliary engine (3, 10, 30) is integrated in the MGB (40) in conjunction with the generators (6) of the energy conversion system (6, 6a, 6b, 7, 8, 8a, 8b) in order to provide non-propulsive power, the auxiliary engine (3, 10, 30) being capable of providing non-propulsive power to the on-board network (2) and to the power electronics (9) via the generators (6) on the MGB (40) and propulsive power via the MGB (40) to at least one propulsion member (4, 41).

11. Configuration for supplying energy according to one of claims 8 or 9, wherein the connection between the auxiliary engine (3, 10, 30) and the energy conversion system (6a, 6b, 7, 8, 8a, 8b) is produced by means of a reduction gear assembly (11a to 11d) belonging to the mechanical transmission system (11 a to 11d, 40).

12. Configuration for supplying energy according to the preceding claim, wherein the mechanical transmission system (11a to 11d, 40) comprises a reduction gear assembly (11a to 11d), this reduction gear assembly (11a to 11d) directly connecting the auxiliary engine (3, 10) to the MGB (40) and/or to a drive shaft (4A) of the anti-torque rotor (4), and the auxiliary engine (3, 10) to a motor generator (7) and/or to at least one generator (6, 6a, 6b) forming part or all of the energy conversion system (6a, 6b, 7, 8, 8a, 8b) in order to provide electrical energy to the on-board network (2) and to the power electronics (9).

13. Configuration for supplying energy according to claim 12, wherein the reduction gear assembly (11a to 11d) comprises at least two lines of speed reduction gears (111 to 113) coupled by means of at least one stub shaft (11L, 11N) between the auxiliary engine (3, 10, 30) mounted on the first line (111) and a power take-off (11M) on the MGB (40) or the ATR (4) mounted on the second line (112), and wherein at least one stub shaft (11L) is equipped with a reversible decoupling means (12) and a free wheel (13a) so that the auxiliary engine (3,10) does not drive the main rotor (41) on the ground, and the main rotor (41) does not drive the auxiliary engine (3, 10, 30) on the ground or during flight, respectively.

14. Configuration for supplying energy according to the preceding claim, wherein, in the case where the generator(s) (6a, 6b) of the energy conversion system (6a, 6b, 7, 8, 8a, 8b) is/are connected directly to the reduction gear assembly (11a, 11b), the stub shaft (11L) equipped with the reversible decoupling means (12) and the free wheel (13a) drives the power take-off (11M) and the generator(s) (6a, 6b) mounted via a free wheel (13b) on the second line of gears (113) and/or on at least one second stub shaft (11N) equipped with a free wheel (13c) between a generator (6a) and the auxiliary engine (3, 10, 30).

15. Configuration for supplying energy according to claim 13, wherein, in the case where the auxiliary engine (3, 10, 30) has a free turbine (100), the free turbine (100) drives the generator(s) (6a, 6b) on the second line of gears (112) of the reduction gearbox (11c, 11d) by means of a stub shaft equipped with a free wheel (13a) and a brake (17) or on a third line of gears (113) mounted with a free wheel (13b) on a stub shaft (11L) equipped with a reversible decoupling means (12) and a free wheel (13a) as well as on at least one second stub shaft (11N) mounted with a free wheel (13c) between the free turbine (100) and a generator (6a).
